# DEMANDE DE BREVET EUROPEEN

(11) **EP 2 506 532 A1**
(43) Date de publication de la demande: **03.10.2012**
(21) Numéro de dépôt: 11305358.1
(22) Date de dépôt: 30.03.2011
(51) Int. Cl.: H04L 29/08, H04W 8/20, G06F 9/445

(54) **Procédé de mise à jour d'éléments sécurisés compris dans des terminaux d'un réseau de télécommunication et serveur de mise à jour correspondant**

(71) Demandeur: Gemalto SA, 92190 Meudon (FR)
(72) Inventeur: Mosse, Franck, 13130, Berre L'Etang (FR); Mallet, Lionel, 13007, Marseille (FR); Pico, Richard, 13080, Luynes (FR)

(57) **Abrégé**

L'invention concerne notamment un procédé de mise à jour d'éléments sécurisés (102) compris dans des terminaux d'un réseau de télécommunication. Les terminaux se connectent, pour des mises à jour récurrentes et selon un premier ordre (50) à un serveur (100) du réseau pour que celui-ci puisse leur transmette des données. Le procédé consiste, dans le cadre d'une campagne de mise à jour des éléments sécurisés (102), à transmettre des messages (116) de demande de connexion aux éléments sécurisés (102) pour qu'ils se connectent au serveur (100).

Selon l'invention, le procédé consiste à transmettre en priorité les messages (116) de demande de connexion aux éléments sécurisés (102) dans un ordre inverse (51) du premier ordre (50), afin de mettre à jour en priorité les derniers éléments sécurisés (102) qui ont été mis à jour par les mises à jour récurrentes, à partir du début (DC) de la campagne de mise à jour.

## Description

Le domaine de l'invention est celui des télécommunications et concerne notamment un procédé de mise à jour d'éléments sécurisés compris dans des terminaux d'un réseau de télécommunication, par exemple de type cellulaire. Les terminaux sont par exemple des terminaux mobiles, tels que des téléphones portables, des véhicules, ou des PDAs.

Il est connu, par la demande FR-2892837 de télécharger des données dans des éléments sécurisés présents dans un réseau de radiocommunications pendant une campagne. Le téléchargement est opéré à partir d'un serveur de mise à jour relié au réseau de télécommunications.

Les éléments sécurisés sont des cartes à puce, telles que des cartes MMC (Mufti-Media Card), SD (Secure Digital) ou UICC (Universal Integrated Circuit Card). La carte à puce UICC est par exemple une carte munie d'une application SIM (Subscriber Identity Module) lorsque le terminal est un mobile du type GSM ou GPRS, ou d'une application USIM (Universal Subscriber Identity Module), RUIM (Removable User Identity Module) ou ISIM (IP Subscriber Identity Module), associées à des terminaux mobiles fonctionnant en accès multiple à répartition par codes CDMA (Coded Division Multiple Access) de la troisième génération (3GPP), du type UMTS (Universal Mobile Telecommunications System) ou UTRAN (UMTS Terrestrial Radio Access Network), de la troisième génération (3GPP2) du type CDMA 2000 ou de la quatrième génération (LTE).

Le serveur de mise à jour, également appelé serveur de campagne ou plateforme d'administration de cartes OTA (Over The Air), comprend un logiciel qui permet à l'opérateur gérant le réseau de radiocommunications de conserver le contrôle des cartes à puce dans les terminaux mobiles et de modifier leur contenu. Ces opérations à l'initiative de l'opérateur (mode push) concernent par exemple le téléchargement d'un fichier dans des cartes prédéterminées du parc géré par l'opérateur, ou le téléchargement ou l'effacement d'une application déterminée, ou bien la modification de données d'un fichier ou d'une application déterminée dans des cartes gérées par l'opérateur.

Dans un réseau de télécommunications classique, des mises à jour récurrentes des éléments sécurisés sont prévues, en dehors des campagnes de mise à jour massives. Ces mises à jour récurrentes consistent à programmer les éléments sécurisés pour qu'ils se connectent, par l'intermédiaire des terminaux mobiles dans lesquels ils sont compris, au serveur de mise à jour. Un élément sécurisé donné se connecte donc de lui-même au serveur, par exemple sur une base régulière (tous les huit jours par exemple), au serveur de mise à jour. Le serveur de mise à jour télécharge alors, si nécessaire, des données dans l'élément sécurisé. Le serveur de mise à jour peut également indiquer à l'élément sécurisé quand ce dernier devra se reconnecter au serveur.

Dans les réseaux IP actuels, un élément sécurisé se connecte au serveur selon le protocole http : il ouvre un lien sécurisé avec le serveur et ce dernier transmet les données de mise à jour en exploitant ce lien. En pratique, l'élément sécurisé fait un «open channel» sur https et le serveur, s'il est disponible, lui répond. Le serveur peut simultanément gérer en parallèle plusieurs milliers de connexions sécurisées afin de répondre à autant d'éléments sécurisés et effectuer leurs mises à jour.

Un serveur de mise à jour peut ainsi gérer dans le temps un parc de plusieurs millions, voire plusieurs centaines de millions d'éléments sécurisés.

Un des problèmes rencontré avec les serveurs de mise à jour actuels est qu'il est parfois nécessaire de déclencher au niveau des serveurs des campagnes de mise à jour lorsqu'on souhaite rapidement mettre à jour des éléments sécurisés sans attendre qu'ils viennent se connecter de manière récurrente, c'est-à-dire automatiquement, au serveur. Ces mises à jour rapides peuvent par exemple consister à corriger une erreur (« patcher ») le système d'exploitation des éléments sécurisés ou à remplacer une applet bancaire par une autre si on y a détecté une faille de sécurité. Ces mises à jour ne peuvent attendre que les éléments sécurisés se connectent de leur propre initiative au serveur et il est dès lors nécessaire de lancer une campagne de mise à jour des éléments sécurisés. Le lancement d'une telle campagne consiste classiquement à envoyer à chaque élément sécurisé un message de demande de connexion pour qu'il se connecte au serveur. Une telle campagne consiste par exemple à envoyer à un lot de quelques milliers d'éléments sécurisés un message SMS ou E-SMS (c'est-à-dire un message SMS comportant une commande) leur indiquant qu'ils doivent se connecter au serveur de mise à jour. Une fois les connexions établies comme indiqué précédemment, le serveur transmet les données de mise à jour (patch du système d'exploitation ou remplacement d'une application par une autre par exemple) aux éléments sécurisés qui se seront connectés au serveur.

Cette solution présente cependant de nombreux inconvénients.

Un premier inconvénient de cette solution est que le nombre de SMS ou de E-SMS à transmettre est très important et entraîne une surcharge du réseau.

Un deuxième inconvénient est que le serveur contacte non seulement les éléments sécurisés qui sont effectivement actifs dans le réseau, mais également ceux qui ont été provisionnés dans le HLR (Home Location Register) de l'opérateur du réseau. Certains de ces éléments sécurisés peuvent en effet ne pas être actifs, par exemple encore non distribués à leurs utilisateurs finaux. On tente alors d'adresser des éléments sécurisés qui ne sont pas sur le terrain et qui ne pourront donc répondre aux sollicitations des messages de demande de connexion.

Un troisième inconvénient de cette solution est qu'il faut prévoir autant de possibilités d'ouverture de canaux https que l'on envoie de messages de demande de connexion, en plus de celles nécessaires pour les mises à jour récurrentes. Ceci peut entraîner une surcharge du serveur et donc nécessiter de ne pas solliciter trop d'éléments sécurisés simultanément, ce qui entraîne une baisse du nombre de mises à jour des éléments sécurisés par la campagne.

La présente invention a notamment pour objectif de remédier à ces inconvénients.

Plus précisément, un des objectifs de l'invention est de fournir un procédé de mise à jour d'éléments sécurisés limitant, dans le cas d'une campagne de mise à jour, le nombre de messages de demandes de connexion transmis par le serveur à ces éléments sécurisés, ce procédé n'adressant que les éléments sécurisés effectivement actifs sur le terrain et assurant un équilibre de la charge du serveur.

Cet objectif, ainsi que d'autres qui apparaîtront par la suite, est atteint grâce à un procédé de mise à jour d'éléments sécurisés compris dans des terminaux d'un réseau de télécommunication, les terminaux se connectant, pour des mises à jour récurrentes et selon un premier ordre à un serveur du réseau pour que celui-ci puisse leur transmette des données, le procédé consistant, dans le cadre d'une campagne de mise à jour des éléments sécurisés, à transmettre des messages de demande de connexion aux éléments sécurisés pour qu'ils se connectent au serveur, le procédé consistant à transmettre en priorité les messages de demande de connexion aux éléments sécurisés dans un ordre inverse du premier ordre, afin de mettre à jour en priorité les derniers éléments sécurisés qui ont été mis à jour par les mises à jour récurrentes, à partir du début de la campagne de mise à jour.

Avantageusement, les éléments sécurisés sont des cartes SIM.

Dans un autre mode de mise en oeuvre, les éléments sécurisés sont des ESE.

Les terminaux sont préférentiellement des téléphones portables.

Les messages de demande de connexion sont avantageusement constitués par des ESMS.

Le procédé selon l'invention consiste préférentiellement à transmettre du serveur aux éléments sécurisés une date de future mise à jour récurrente, pendant la campagne de mise à jour.

L'invention concerne également un serveur de mise à jour d'éléments sécurisés compris dans des terminaux d'un réseau de télécommunication, le serveur comprenant un contrôleur de flux connecté à une base de données des dates de mise à jour des éléments sécurisés, le contrôleur de flux commandant l'émission de messages de demande de connexion à l'attention des éléments sécurisés en fonction de la dernière date de mise à jour des éléments sécurisés à partir de la date de mise à jour la plus récente jusqu'à la date de mise à jour la plus ancienne, à partir du début d'une campagne de mise à jour.

L'invention sera mieux comprise à la lecture de la description suivante d'un mode de mise en oeuvre préférentiel, donné à titre illustratif et non limitatif, et des dessins annexés dans lesquels :
- La figure 1 représente le déroulement d'une campagne de mise à jour d'éléments sécurisés ;
- La figure 2 représente un système comprenant un serveur selon la présente invention.

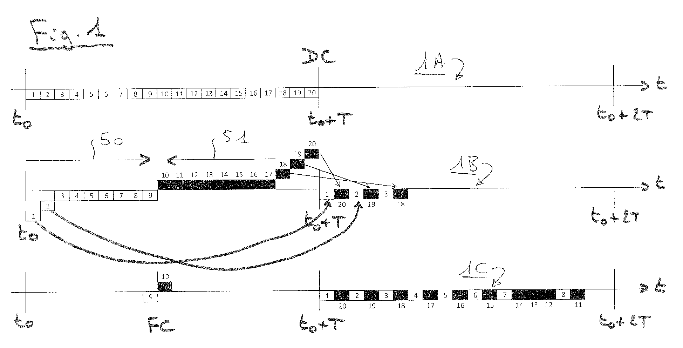

La figure 1 représente le déroulement d'une campagne de mise à jour d'éléments sécurisés. Cette figure comprend trois échelles de temps 1A, 1 B et 1C.

L'échelle 1A montre l'état de mise à jour récurrent d'éléments sécurisés à un instant DC correspondant au début d'une campagne de mise à jour. On considère dans cet exemple que 20 millions d'éléments sécurisés ont été mis à jour pendant une période de mise à jour de durée T depuis un temps t0.

L'échelle 1 B représente le déroulement d'une campagne de mise à jour selon la présente invention. Les lots d'éléments sécurisés situés sous l'axe des temps sont ceux pour lesquels des mises à jour récurrentes sont réalisées, c'est-à-dire qu'aucune action spécifique n'est entreprise au niveau du serveur de mise à jour (pas d'envoi de message de demande de connexion depuis le serveur vers les éléments sécurisés). Les lots d'éléments sécurisés situés au-dessus de l'axe des temps sont ceux pour lesquels des mises à jour sont réalisées dans le cadre de la campagne de mise à jour, c'est-à-dire que le serveur envoie à ces éléments sécurisés des messages de demande de connexion.

Comme montré sur l'échelle 1B, les éléments sécurisés concernés par la campagne de mise à jour sont en priorité les derniers éléments sécurisés qui ont été mis à jour par les mises à jour récurrentes, à partir du début DC de la campagne de mise à jour. Ainsi, si un lot référencé 1 a été mis à jour dans le cadre d'une mise à jour récurrente, le lot 20 qui est le dernier à avoir été mis à jour dans le cadre de cette mise à jour récurrente est le premier à être concerné par la campagne. Des messages de demande de connexion au serveur sont donc transmis aux éléments sécurisés de ce lot, à partir du serveur. Une fois qu'ils se sont connectés au serveur, des données relatives à la campagne de mise à jour leur sont transmises. Ensuite, un lot d'éléments sécurisés 2 est mis à jour automatiquement dans le cadre des mises à jour récurrentes. Par la suite, la campagne de mise à jour vise un lot 19 d'éléments sécurisés, et ainsi de suite, jusqu'à la fin de la campagne représentée sur la figure 1C et référencée FC.

On constate donc que si les lots d'éléments sécurisés en début de campagne étaient référencés 1 à 20, ils sont maintenant chronologiquement référencés 1 - 20 - 2 - 19 ― 3 ― 18 ― 4 ― 17 ― ... - 12 ― 8 ― 11 et que la campagne se terminera probablement par le lot 10 précédé par une mise à jour récurrente du lot 9.

On voit donc que si dans le cadre d'une mise à jour récurrente, les éléments sécurisés se connectent selon un premier ordre au serveur (de 1 à 20), ce premier ordre étant symbolisé par une flèche 50, la campagne de mise à jour adresse en priorité les messages de demande de connexion aux éléments sécurisés dans un ordre inverse 51 de ce premier ordre 50. Il s'en suit une transmission d'un nombre de demande de connexion limité puisque seuls les lots 10 à 20 sont concernés par la campagne, alors que les lots 1 à 9 sont mis à jour dans le cadre de la mise à jour récurrente qui elle ne nécessite pas la transmission de demandes de connexion.

De plus, comme les lots 10 à 20 sont des lots qui ont préalablement fait l'objet de mises à jour récurrentes (échelle 1A), les messages de demandes de connexion sont transmis à des éléments sécurisés qui sont effectivement sur le terrain, puisqu'ils se sont manifestés au préalable.

Enfin, le fait d'adresser en priorité les éléments sécurisés qui viennent d'être mis à jour de manière récurrente permet de ne pas attendre la fin de la période T de mise à jour récurrente (t0 + 2T) pour que ces éléments soient mis à jour.

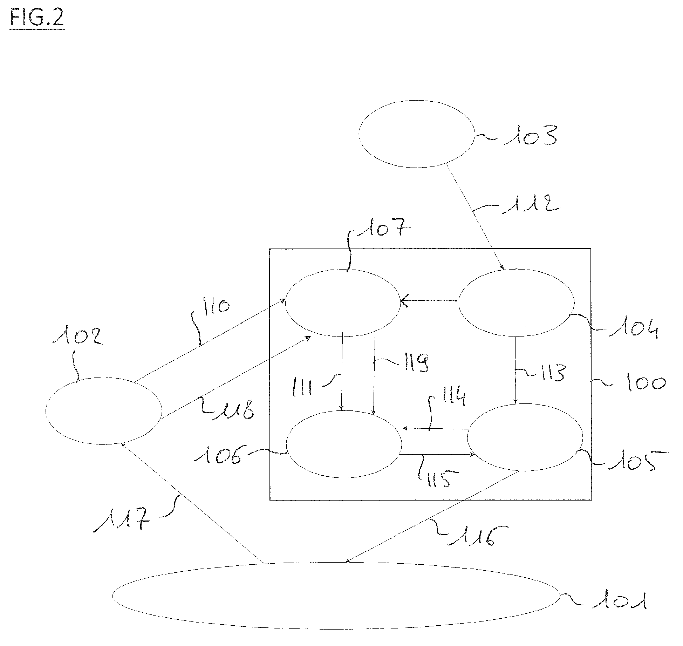

La figure 2 représente un système comprenant un serveur selon la présente invention.

Le système de la figure 2 comprend un serveur 100 de mise à jour d'éléments sécurisés, une partie d'un réseau de télécommunication constitué par un centre serveur de messages courts (SMSC) 101, ainsi qu'un parc d'éléments sécurisés 102 compris dans des terminaux, mobiles ou fixes, pouvant être administrés par le serveur 100. Le système comprend également un client 103 apte à se connecter au serveur 100 pour lui commander une campagne de mise à jours des éléments sécurisés 102.

Le serveur 100 comprend une unité de création de campagne 104, un contrôleur de flux du serveur 105, une base de données 106 de l'historique des mises à jours des éléments sécurisés 102, ainsi qu'un module https 107. Le module https 107 contient une application Internet dont l'exécution est assurée dans un mode sécurisé. Il peut par exemple s'agir d'un module war déployé dans un serveur d'application.

Selon l'invention, deux procédés se déroulent en parallèle : une mise à jour récurrente (par exemple à chaque période T) des éléments sécurisés 102, et une mise à jour de ces éléments sécurisés par campagne (par exemple une campagne considérée comme urgente ne pouvant attendre la fin d'une période T pour mettre à jour les éléments sécurisés 102).

La mise à jour récurrente des éléments sécurisés 102 consiste d'abord à programmer les éléments sécurisés 102, lors d'une phase d'initialisation, pour que ceux-ci se connectent régulièrement au serveur 100. Les éléments sécurisés coopèrent avec des terminaux alimentés comprenant des horloges. Les éléments sécurisés 102 consultent régulièrement les horloges des terminaux auxquels ils sont connectés et, lorsque le moment où il leur a été demandé de se connecter au serveur 100 est arrivé, ceux-ci envoient au module https 107 une requête 110 d'ouverture d'un canal sécurisé. Cette requête 110 consiste par exemple dans le cas d'un réseau IP (par exemple de type LTE) à transmettre une commande « open channel » au module https 107. Un serveur http de type Apache peut servir d'intermédiaire entre les éléments sécurisés 102 et le module https 107 afin de sécuriser le canal de communication. Une fois ce canal établi, le module https 107 effectue la mise à jour des éléments sécurisés 102 (non représentée) et stocke lors d'une étape 111 dans la base de données 106 la dernière date de mise à jour des éléments sécurisés 102 qui se sont connectés.

La mise à jour des éléments sécurisés 102 par campagne est décidée par le client 103. Le client 103 est par exemple un TSM (Trusted Party Manager) ou une entité autorisée à décider qu'une mise à jour urgente des éléments sécurisés 102 est nécessaire.

Le client 103 transmet à cet effet une commande 112 à l'unité de création de campagne 104, avec les éléments nécessaires pour que cette campagne puisse être menée à bien (patch du système d'exploitation des éléments sécurisés 102, nouveaux programmes à installer dans les éléments sécurisés 102, scénario des tâches à effectuer,...).

L'unité de création de campagne 104 envoie après cela une demande d'envoi 113 d'un message de connexion au contrôleur de flux 105, par exemple de type « envoie un trig. SMS aux éléments sécurisés 102 ».

A réception de cette commande, le contrôleur de flux 105 interroge, lors d'une étape 114, la base de données 106, pour que celle-ci lui fournisse, lors d'une étape 115, l'historique des mises à jours des éléments sécurisés 102. A partir de cet historique et plus précisément des dates des dernières mises à jour effectuées, le contrôleur de flux 105 qui connaît le nombre maximum de connexions simultanées pouvant être acceptées par le serveur 100, transmet, lors d'une étape 116, des messages de demande de connexion (« trig SMS ») au SMSC 101. Le nombre de messages transmis au SMSC 101 tient compte de la charge du serveur 100 due aux mises à jour récurrentes. Le SMSC 101 transmet alors aux éléments sécurisés 102, lors d'une étape 117, des commandes (SMS ou E-SMS) d'ouverture de canaux http (par exemple du type « open channel »). Les éléments sécurisés contactés ouvrent alors des canaux de communication avec le module https 107 (étape 118) qui effectue leurs mises à jour avec les éléments nécessaires stockés dans l'unité de création de campagne 104 et transmet les dates de mises à jour (étape 119) à la base de données 106.

Les éléments sécurisés mis à jour sont typiquement des cartes SIM ou des UICC. Il est également possible d'intégrer des fonctionnalités SIM dans des éléments solidaires des terminaux qui les renferment. On parle alors d'ESE (Embedded Secure Element).

L'invention s'applique également aux communications M2M où les éléments sécurisés sont compris dans des machines tels que des véhicules, des distributeurs automatiques ou des caméras.

## Revendications

1. Procédé de mise à jour d'éléments sécurisés (102) compris dans des terminaux d'un réseau de télécommunication, lesdits terminaux se connectant, pour des mises à jour récurrentes et selon un premier ordre (50) à un serveur (100) dudit réseau pour que celui-ci puisse leur transmette des données, ledit procédé consistant, dans le cadre d'une campagne de mise à jour desdits éléments sécurisés (102), à transmettre des messages (116) de demande de connexion auxdits éléments sécurisés (102) pour qu'ils se connectent audit serveur (100),
**caractérisé en ce qu'**il consiste à transmettre en priorité lesdits messages (116) de demande de connexion auxdits éléments sécurisés (102) dans un ordre inverse (51) dudit premier ordre (50), afin de mettre à jour en priorité les derniers éléments sécurisés (102) qui ont été mis à jour par lesdites mises à jour récurrentes, à partir du début (DC) de ladite campagne de mise à jour.

2. Procédé selon la revendication 1, **caractérisé en ce que** lesdits éléments sécurisés (102) sont des cartes SIM.

3. Procédé selon la revendication 1, **caractérisé en ce que** lesdits éléments sécurisés (102) sont des ESE.

4. Procédé selon l'une des revendications 1 à 3, **caractérisé en ce que** lesdits terminaux sont des téléphones portables.

5. Procédé selon l'une des revendications 1 à 4, **caractérisé en ce que** lesdits messages de demande de connexion (116) sont constitués par des ESMS.

6. Procédé selon l'une des revendications 1 à 5, **caractérisé en ce qu'**il consiste également à transmettre dudit serveur (100) auxdits éléments sécurisés (102) une date de future mise à jour récurrente, pendant ladite campagne de mise à jour.

7. Serveur (100) de mise à jour d'éléments sécurisés (102) compris dans des terminaux d'un réseau de télécommunication, ledit serveur (100) comprenant un contrôleur de flux (105) connecté à une base de données (106) des dates de mise à jour desdits éléments sécurisés (102), ledit contrôleur de flux (105) commandant l'émission de messages (116) de demande de connexion à l'attention desdits éléments sécurisés (102) en fonction de la dernière date de mise à jour desdits éléments sécurisés (102) à partir de la date de mise à jour la plus récente jusqu'à la date de mise à jour la plus ancienne, à partir du début (DC) d'une campagne de mise à jour.
